# FASCICULE DE BREVET EUROPEEN

(11) **EP 0 334 757 B1**
(45) Date de publication et mention de la délivrance du brevet: **15.12.1993**
(21) Numéro de dépôt: 89400807.7
(22) Date de dépôt: 22.03.1989
(51) Int. Cl.: G21C 17/02

(54) **Dispositif de mesure en ligne du rayonnement gamma émis par l'eau d'un circuit de réacteur nucléaire, notamment le circuit primaire de refroidissement d'un réacteur nucléaire à eau pressurée**
Vorrichtung zur Messung während des Betriebes von aus dem Wasserkreislauf eines Kernreaktors herrührender Gammastrahlung, insbesondere vom Primärkreislauf eines Druckwasserkernreaktors
Device for on line measurement of gamma radiation from a nuclear reactor water loop, especially a primary cooling loop of a nuclear pressurized water reactor

(30) Priorité: 22.03.1988 FR 8803694
(43) Date de publication de la demande: 27.09.1989
(73) Titulaire: COMMISSARIAT A L'ENERGIE ATOMIQUE, 75015 Paris Cédex 15 (FR); ELECTRICITE DE FRANCE Service National, 75008 Paris (FR)
(72) Inventeur: Warlop, Raymond, F-38100 Grenoble (FR); Montagnon, Françoise, F-01700 Neyron (FR)
(74) Mandataire: Martin, Jean-Jacques

(56) Documents cités:
- EP-A- 0 198 342
- FR-A- 2 099 682
- FR-A- 2 231 286
- PATENT ABSTRACTS OF JAPAN, vol. 10, no. 135 (P-457)[2192], 20 mai 1986, page 7 P 457; & JP-A-60 256 036 (DENSOKU KOGYO K.K.) 17-12-1985

## Description

La présente invention concerne un dispositif de mesure en ligne du rayonnement gamma émis par l'eau d'un circuit de réacteur nucléaire, notamment le circuit primaire de refroidissement d'un réacteur nucléaire à eau pressurisée.

Pour contrôler l'état du coeur du réacteur, notamment pour révéler des gainages endommagés et mettre en évidence des défauts et suivre leur évolution, on a jusqu'à présent analysé par spectrométrie gamma les divers isotopes (du xénon, du krypton, de l'iode) présents dans des prélèvements du circuit d'eau primaire, ces prélèvements étant opérés de façon manuelle et ponctuelle.

Un dispositif de prélèvement du fluide à analyser est décrit dans le brevet FR-A-2 231 286, ce dispositif comportant :
. un boîtier de prélèvement comprenant une cavité formant réceptacle,
. un moyen de chauffage, de mesure et de régulation de la température du boîtier,
. une fenêtre mince constituant une paroi de la cavité dans le boîtier,
. un support escamotable sur lequel s'appuie la fenêtre mince,
. un système de détection protégé par un écran thermique.

A la différence de la technique de détection des neutrons différés émis par certains isotopes à vie courte, technique aisée à automatiser et qui donne aussi certaines informations sur l'intégrité du combustible, la spectrométrie gamma permet de mettre en évidence des défauts extrêmement ténus et de disposer d'informations très fines sur l'état du gainage permettant de caractériser, en cours de fonctionnement, le nombre de crayons de combustible défectueux et le degré d'endommagement de leur gainage.

La périodicité des mesures d'activité gamma peut varier de 1 à 2 prélèvements par jour ou par semaine, en régime stationnaire de la central, jusqu'à une périodicité de 15 minutes à 3 heures pendant les phases transitoires de fonctionnement de la centrale si l'on veut suivre les bouffées d'activité qui en résultent.

Les analyses par prélèvements périodiques d'échantillons, technique jusqu'à présent seule employée, sont source de nombreuses difficultés : outre leur aspect fastidieux et coûteux (en raison notamment du personnel nécessaire pour le prélèvement et les manipulations d'analyse), l'inconvénient le plus important est celui de l'impossibilité de disposer immédiatement des résultats de l'analyse, en raison d'une part des pertes de temps dans les prélèvements et les transports des échantillons, et d'autre part dans l'analyse de ces derniers et le dépouillement des résultats.

L'un des buts de la présente invention est de proposer un dispositif de mesure permettant de réaliser une telle spectrométrie gamma du fluide de refroidissement de façon entièrement automatisée, en temps réel.

La difficulté majeure posée par la réalisation d'un dispositif en ligne est de s'affranchir de l'effet perturbateur des produits de corrosion et des produits de fission solides se déposant sur les parois du volume de prélèvement.

Au lieu des échantillonnages manuels hebdomadaires ou bihebdomadaires préconisés actuellement, le dispositif automatique permet sans difficulté d'obtenir des mesures à une fréquence minimale de deux mesures par jour, et l'on peut aussi, sans contrainte supplémentaire, enregistrer les bouffées d'activité consécutives aux transitoires d'exploitation grâce à des séquences de mesure à fréquence élevée déclenchées pendant ces phases transitoires.

En outre, la possibilité de mesure à une fréquence élevée permet, grâce à la technique de spectrométrie gamma en ligne, de rechercher des corrélations entre l'apparition des ruptures et les paramètres de fonctionnement du réacteur, qui sont eux-mêmes acquis par le dispositif automatique.

On verra de plus que, grâce aux différentes caractéristiques du dispositif de la présente invention, il est possible d'obtenir des mesures extrêmement fiables, ne présentant pas d'incertitudes dues aux durées de décroissance ou de comptage, permettant donc un suivi très précis de l'état du coeur du réacteur, sans gêne dûe aux produits de corrosion et produits de fission solides.

A cet effet, selon la présente invention, le dispositif comprend :
- au moins une capacité de comptage du fluide à analyser,
- un détecteur de rayonnement, placé en vis-à-vis de cette capacité,
lequel dispositif est caractérisé en ce que :
- la capacité de comptage reçoit le fluide à analyser suivant un écoulement continu, de manière à permettre une mesure en temps réel de l'activité du fluide, notamment de l'activité due aux isotopes à vie courte, cette capacité de comptage en continu présentant une valeur optimale du rapport volume/surface vu par le détecteur ainsi qu'un état de finition "grand brillant" des fonds bombés, de manière a rendre négligeable la gêne occasionnée par la contamination des parois de la capacité de comptage par les produits de corrosion et les produits de fission solides ;
- il comporte en outre des moyens de collimation, interposés entre la capacité et le détecteur de rayonnement, ces moyens étant constitués d'une pluralité de collimateurs de tailles différentes montés sur un organe commun, mobile par rapport à l'ensemble capacité/détecteur, et des moyens pour déterminer automatiquement la position de l'organe mobile en fonction du signal de mesure délivré par le détecteur, de manière à interposer entre le détecteur et la capacité un collimateur de taille d'autant plus petite que le signal délivré révèle un rayonnement intense.

Selon un certain nombre de caractéristiques avantageuses de la présente invention :
- l'organe mobile comporte au moins une position supplémentaire permettant d'occulter la capacité et de placer une première source calibrée en vis-à-vis du détecteur afin de contrôler l'étalonnage de celui-ci ;
- il est prévu en outre au moins une seconde source calibrée irradiant le détecteur en permanence, indépendamment de la position de l'organe mobile, afin de réaliser un calage en énergie de la chaîne de mesure ; dans ce cas, de préférence, la seconde source est disposée au-dessus ou au-dessous du détecteur, celui-ci étant disposé au centre de l'organe mobile qui a la forme d'un barillet s'étendant dans un plan horizontal et tournant autour d'un axe vertical, la capacité étant disposée en un point périphérique de ce barillet ;
- il est prévu une deuxième capacité de comptage fonctionnant en capacité de stockage, de manière à permettre une mesure différée de l'activité du fluide, notamment de l'activité résultant des isotopes à vie longue, cette deuxième capacité de comptage en différé présentant elle aussi une valeur optimale du rapport volume/surface vu par le détecteur ainsi qu'un état de finition "grand brillant" des fonds bombés, de manière à rendre négligeable la gêne occasionnée par la contamination des parois de la deuxième capacité de comptage par les produits de corrosion et les produits de fission solides ;
- dans ce dernier cas, de préférence, l'organe mobile a la forme d'un barillet s'étendant dans un plan horizontal et tournant autour d'un axe vertical, les capacités étant disposées en des points périphériques de ce barillet diamétralement opposés par rapport à l'axe du barillet, ce dernier comportant trois collimateurs disposés à 120° et tournant par pas de 60° ou d'un sous-multiple de 60° de manière à pouvoir placer, en fonction de l'angle de rotation, l'un quelconque des collimateurs face à une et une seule des deux capacités ;
- dans le cas précédent, lorsqu'en outre il est prévu une première source calibrée, cette dernière est placée en un point de la périphérie du barillet situé à 90° par rapport au diamètre des deux capacités, et dans lequel le barillet est mobile par pas de 30° ou d'un sous-multiple de 30° de manière à pouvoir placer, en fonction de l'angle de rotation, l'un quelconque des collimateurs face à une et une seule des trois sources constituées par les deux capacités et la source calibrée.

D'autres caractéristiques et avantages de la présente invention apparaîtront à la lecture de la description détaillée ci-dessous, faite en référence aux dessins annexés sur lesquels :
- la figure 1 est une vue d'ensemble du dispositif de mesure de l'invention et de son circuit hydraulique associé,
- la figure 2 est une vue en élévation, en couple selon la ligne D1 de la figure 3, du dispositif de mesure proprement dit,
- la figure 3 est une vue en plan, en coupe selon la ligne III-III de la figure 2, de ce même dispositif.

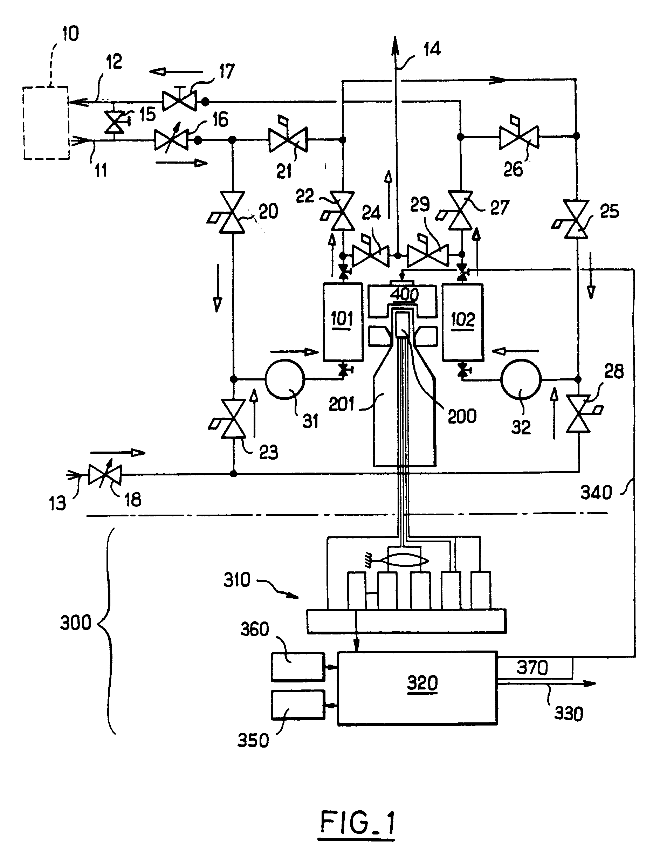

Sur la figure 1, la référence 10 indique symboliquement le circuit primaire d'eau de refroidissement d'un réacteur à eau pressurisée, circuit sur lequel on effectue un prélèvement de l'eau à partir d'un piquage, après détente à une pression d'environ 5 bars et refroidissement à 25°C environ.

L'eau ainsi prélevée est amenée au dispositif de mesure par une conduite 11 et, après mesure, il sera recyclé vers le circuit primaire par une conduite de sortie 12.

Il est également prévu une alimentation en eau désionisée de rinçage 13, permettant notamment d'assurer le lavage du circuit hydraulique de l'appareil de mesure, les effluents étant rejetés par une conduite 14.

Une série de vannes 15 à 18 permettent d'alimenter sélectivement le dispositif de mesure par de l'eau prélevée sur le circuit primaire, ou par de l'eau de rinçage.

Le dispositif de mesure proprement dit comporte deux capacités 101 et 102 formant volume de comptage pour l'eau à analyser.

La gêne occasionnée par la contamination des parois du pot de comptage par les produits de corrosion et produits de fission solides est rendue négligeable par :
- un rapport volume/surface vu par le détecteur optimum, et
- un état de finition "grand brillant" des fonds bombés.

La ou les cavités de comptage 101, 102 ont une géométrie particulière destinée à optimiser le rapport volume de la cavité/surface des parois, de façon que le détecteur 200 ne puisse jamais voir les parois latérales des cavités, celles-ci étant suffisamment évasées, mêmes à travers le collimateur de diamètre le plus grand. Ainsi, le bruit de fond dû aux rayons gamma rétrodiffusés est minimisé. La finition "grand-brillant" des fond bombés ou parois perpendiculaires à l'axe du détecteur permet de diminuer encore le bruit de fond.

L'activité de l'eau dans ces capacités 101 et 102 est mesurée par un détecteur 200 relié à un circuit de mesure et de commande 300, qui peut être distant du dispositif de mesure, et même commun à plusieurs dispositifs de mesure. Il est également prévu un barillet rotatif 400 dont la fonction sera expliquée plus loin.

Le détecteur de rayonnement gamma est constitué d'un cristal de germanium hyper-pur qui transforme les rayons gamma qu'il reçoit en variations de tension électrique lorsqu'on lui applique une polarisation à très haute tension. Ce détecteur fonctionne à la température de l'azote liquide et, pour cela il est lié thermiquement au contenu d'un cryostat 201 alimenté par un récipient d'azote liquide.

Une série de vannes 20 à 29 permettent d'alimenter sélectivement l'une ou l'autre des deux capacités 101 ou 102, cette alimentation pouvant être, selon la position des vannes, soit une alimentation continue (le fluide débité étant recyclé immédiatement en aval) soit une simple alimentation de remplissage (la capacité étant remplie, puis fermée en amont et en aval afin d'y conserver un certain temps le fluide pour permettre une mesure différée de l'activité de celui-ci).

En particulier, la mesure d'activité en ligne est surtout intéressante en ce qui concerne l'activité des isotopes à courte durée de vie, tandis que la mesure différée (par exemple après des temps de décroissance d'une dizaine d'heures) permet d'améliorer considérablement la mesure de l'activité des isotopes à longue durée de vie, tels que l'iode 131, le césium 134 ou le césium 137.

La commande des différentes vannes 21 à 29 peut être réalisée automatiquement par l'unité de commande 300 ; on prévoit en outre deux débitmètres 31 et 32 permettant de contrôler le débit d'eau dans chacune des deux capacités 101 et 102.

L'ensemble de mesure et de commande 300 comporte un ensemble de circuits 310 d'alimentation, d'amplification et de conversion et une unité de calcul 320 assurant le traitement des signaux délivrés par le capteur et la commande des différents organes du dispositif de mesure via un automate 370, notamment la commande des vannes 21 à 29 et la commande de la position du barillet 400, par la liaison 340.

L'ensemble 300 permet, en outre, la mesure des pertes de comptage à l'aide d'un générateur d'impulsions à fréquence fixe.

Les informations élaborées peuvent être transmises par une liaison série 330, et il est prévu un affichage 350 donnant une indication de l'activité mesurée par le détecteur, ainsi qu'un clavier 360 permettant d'introduire un certain nombre de paramètres et d'ordres de commande pour l'unité 320.

L'unité de calcul 320 :
- assure la compensation des pertes de comptage ;
- contrôle la cohérence des différentes raies gamma des nucléides mesurés après calcul de la précision sur les résultats ;
- fournit à l'opérateur des grandeurs directement utilisables pour la surveillance du coeur, à savoir l'activité instantanée équivalente en iode 131 et l'activité cumulée équivalente en iode 131 ;
- contrôle le bon fonctionnement des circuits tant hydrauliques qu'électriques par mesure périodique des débits de fluide et des tensions électriques, toute anomalie risquant de nuire à la qualité des mesures étant signalée sur un journal de bord et rendant les mesures non valides ; et
- effectue une comparaison entre les mesures en ligne et les mesures différées pour proposer un seul tableau des mesures d'activité.

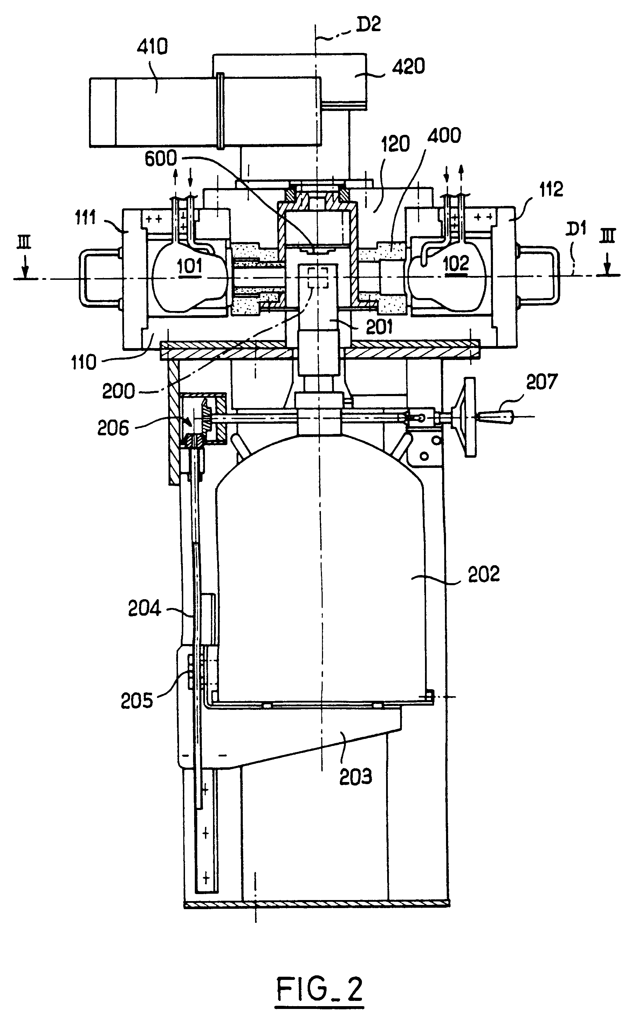

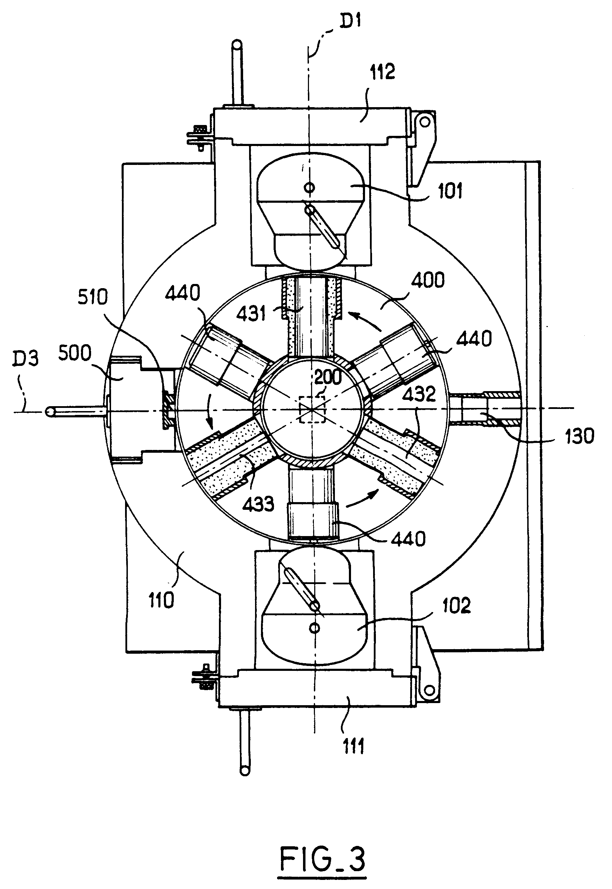

Les figures 2 et 3 représentent plus en détail la structure du dispositif de mesure proprement dit. Les deux capacités 101 et 102 sont placées à l'intérieur d'un corps en plomb 110 soutenu par un châssis qui assure le supportage de l'ensemble des éléments fixes, ainsi que d'un barillet rotatif 400 mobile autour d'un axe vertical D2, de part et d'autre duquel sont disposées les deux capacités 101 et 102.

Ce châssis est également équipé d'un chariot mobile 203 supportant le cryostat 201 du détecteur 200 et sa bouteille d'azote liquide 202. Ce chariot 203 est mobile en translation verticale au moyen d'un système à vis 204 et écrou 205, entraîné par l'intermédiaire d'un renvoi d'angle 206 et d'une manivelle 207. La fonction de ce chariot mobile est de permettre la mise en place du détecteur 200 à l'intérieur du corps 110, exactement à l'intersection des axes D1 (axe commun diamétral des deux capacités 101 et 102) et D2 (axe vertical médiateur des capacités 101 et 102). A cet effet, le détecteur est introduit par une ouverture pratiquée en partie inférieur du corps 110, la position de mesure exacte étant par exemple définie par des contacts électriques de butée placés en un endroit approprié.

L'accès éventuel aux capacités 101 et 102 est réalisé par deux portes 111 et 112 pour permettre leur remplacement et l'étalonnage en sensibilité des deux voies de mesure.

En partie centrale, le corps 110 supporte le barillet tournant 400, l'ensemble étant fermé par un couvercle 120 assurant la protection mécanique et biologique et supportant également les organes de commande mécanique du barillet, à savoir le servo-moteur 410 et son codeur angulaire associé 420.

La barillet central (figure 3) est équipé de trois collimateurs cylindriques 431, 432, 433 disposés à 120°, de diamètres différents (par exemple, des diamètres croissants de 15, 25 et 45 mm), et de trois bouchons 440 disposés également à 120°, et à 60° par rapport aux trois collimateurs.

Les collimateurs 431, 432 et 433, constitués d'un matériau lourd (densité de l'ordre de 17), permettent d'adapter la sensibilité du système de mesure à l'activité à mesurer. Les bouchons 440, constitués du même matériau que les collimateurs, réduisent le bruit de fond provenant d'une capacité lorsque l'on fait une mesure sur la capacité opposée (par exemple, dans la position illustrée sur la figure 3, le bouchon 440 interposé entre la capacité 102 et le détecteur 200, réduit le bruit de fond provenant de cette capacité 102 lorsque l'on effectue la mesure de l'activité du fluide de la capacité 101.

Il est également prévu sur le corps 110, outre les cavités recevant les capacités 101 et 102, une troisième cavité périphérique orientée selon un axe D3 perpendiculaire aux deux axes D1 et D2, et fermée par un bouchon cylindrique 500 en plomb qui supporte une source de calibrage 510, par exemple une source double de cérium 144 et d'europium 152, donnant une référence fixe permettant le contrôle de l'efficacité du détecteur 200.

Il est également prévu (figure 2) une autre source 600, positionnée au dessus du détecteur 110 et placée sur l'axe vertical D2, irradiant le détecteur en permanence. Cette source, par exemple une source double d'américium 241 et de cobalt 60, permet le calage en énergie de la chaîne de mesure.

Le barillet 400 est entraîné par le servomoteur 410 de façon à tourner par pas de 30° ; il peut donc occuper douze positions, qui correspondent à un certain nombre de fonctions différentes.

Si l'on part de la position illustrée sur la figure 3 et si l'on tourne dans le sens indiqué par les flèches sur cette figure, ces fonctions sont les suivantes :
- position illustée : mesure sur la capacité 101, avec collimateur large,
- premier pas : position neutre,
- deuxième pas : mesure sur la capacité 102, avec collimateur étroit,
- troisième pas : mesure sur la source 510, avec collimateur large,
- quatrième pas : mesure sur la capacité 101, avec collimateur moyen,
- cinquième pas : position neutre,
- sixième pas : mesure sur la capacité 102, avec collimateur large,
- septième pas : mesure sur la source 510, avec collimateur moyen,
- huitième pas : mesure sur la capacité 101, avec collimateur étroit,
- neuvième pas : position neutre,
- dixième pas : mesure sur la capacité 102, avec collimateur moyen,
- onzième pas : mesure sur la source 510, avec collimateur étroit.

On notera que l'on pourrait utiliser les trois positions neutres précitées pour mesurer l'activité d'une source diamètralement opposée à la source de calibrage 510. Cependant, cette position, qui normalement est obturée par le bouchon 130, est utile pour vérifier visuellement le bon positionnement du détecteur 200 à l'intersection des trois axes D1, D2 et D3.

## Revendications

1. Un dispositif de mesure en ligne du rayonnement gamma émis par l'eau d'un circuit de réacteur nucléaire, notamment le circuit primaire de refroidissement d'un réacteur nucléaire à eau pressurisée, ce dispositif comprenant :
- au moins une capacité (101, 102) de comptage du fluide à analyser,
- un détecteur de rayonnement (200), placé en vis-à-vis de cette capacité,
lequel dispositif est caractérisé en ce que :
- la capacité de comptage (101 ou 102) reçoit le fluide à analyser suivant un écoulement continu, de manière à permettre une mesure en temps réel de l'activité du fluide, notamment de l'activité due aux isotopes à vie courte, cette capacité de comptage en continu présentant une valeur optimale du rapport volume/surface vu par le détecteur (200) ainsi qu'un état de finition "grand brillant" des fonds bombés, de manière à rendre négligeable la gêne occasionnée par la contamination des parois de la capacité de comptage par les produits de corrosion et les produits de fission solides ;
- il comporte en outre des moyens de collimation, interposés entre la capacité et le détecteur de rayonnement, ces moyens étant constitués d'une pluralité de collimateurs (431, 432, 433) de tailles différentes montés sur un organe commun (400), mobile par rapport à l'ensemble capacité/détecteur, et des moyens pour déterminer automatiquement la position de l'organe mobile en fonction du signal de mesure délivré par le détecteur, de manière à interposer entre le détecteur et la capacité un collimateur de taille d'autant plus petite que le signal délivré révèle un rayonnement intense.

2. Le dispositif de la revendication 1, dans lequel l'organe mobile (400) comporte au moins une position supplémentaire permettant d'occulter la capacité et de placer une première source calibrée (510) en vis-à-vis du détecteur (200) afin de réaliser un contrôle d'efficacité de celui-ci.

3. Le dispositif de la revendication 1, dans lequel il est prévu en outre au moins une seconde source calibrée (600) irradiant le détecteur (200) en permanence, indépendamment de la position de l'organe mobile (400), afin de réaliser un calage en énergie de la chaîne de mesure.

4. Le dispositif de la revendication 3, dans lequel la seconde source (600) est disposée au-dessus ou au-dessous du détecteur (200), celui-ci étant disposé au centre de l'organe mobile qui a la forme d'un barillet (400) s'étendant dans un plan horizontal et tournant autour d'un axe vertical (D2), la capacité (101, 102) étant disposée en un point périphérique de ce barillet.

5. Le dispositif de la revendication 1, dans lequel il est prévu une deuxième capacité de comptage (102 ou 101), fonctionnant en capacité de stockage, de manière à permettre une mesure différée de l'activité du fluide, notamment de l'activité résultant des isotopes à vie longue, cette deuxième capacité de comptage en différé présentant elle aussi une valeur optimale du rapport volume/surface vu par le détecteur (200) ainsi qu'un état de finition "grand brillant" des fonds bombés, de manière à rendre négligeable la gêne occasionnée par la contamination des parois de la deuxième capacité de comptage par des produits de corrosion et les produits de fission solides.

6. Le dispositif de la revendication 5, dans lequel l'organe mobile a la forme d'un barillet (400) s'étendant dans un plan horizontal et tournant autour d'un axe vertical (D2), les capacités (101, 102) étant disposées en des points périphériques de ce barillet diamétralement opposés par rapport à l'axe du barillet, ce dernier comportant trois collimateurs (431, 432, 433) disposés a 120° et tournant par pas de 60° ou d'un sous-multiple de 60° de manière à pouvoir placer en fonction de l'angle de rotation, l'un quelconque des collimateurs face à une et une seule des deux capacités.

7. Le dispositif des revendications 2 et 6 en combinaison, dans lequel la première source calibrée (510) est placée en un point de la périphérie du barillet (400) situé à 90° par rapport au diamètre (D1) des deux capacités (101, 102), et dans lequel le barillet est mobile par pas de 30° ou d'un sous-multiple de 30° de manière à pouvoir placer, en fonction de l'angle de rotation, l'un quelconque des collimateurs (431, 432, 433) face à une et une seule des trois sources constituées par les deux capacités (101, 102) et la source calibrée (510).

## Claims

1. A measurement device for on-line measurement of the gamma radiation emitted by the water in a nuclear reactor circuit, in particular the primary cooling circuit of a pressurized water nuclear reactor, the measurement device comprising :
- at least one volume (101, 102) for metering the fluid to be analized;
- a radiation detector (200) placed facing said volume;
said device being characterized in that :
- the metering volume (101 or 102) receives the fluid to be analyzed with a continuous flow, so as to enable the activity of the fluid to be measured in real time, and in particular its activity due to isotopes having short lifetimes, said continuous metering volume having an optimum volume-to-area ration an seen by the detector (200) as well as a "high glass" surface state for the curved walls, so as to make negligible the interference due to the walls of the metering volume by corrosion products and solid fission products ;
- it also comprises collimator means interposed between said volume and the radiation detector, said collimator means being constituted by a plurality of collimators (431, 432, 433) of different sizes mounted on a common member (400) which is movable relative to the volume-and-detector assembly, and means to automatically determine the position of the moving member as a function of the measurement signal delivered by the detector so that the greater the intensity of the radiation revealed by the delivered signal, the smaller the size of the collimator interposed between the detector and the volume.

2. Device according to claim 1, in which said moving member (400) includes at least one additional position for shutting off the volume from the detector and for placing a first calibrated source (510) facing the detector (200) in order to monitor the effectiveness thereof.

3. A device according to claim 1, in which at least one second calibrated source (600) is also provided for permanently irradiating the detector (200) independently of the position of the moving member (400) so as to provide an energy reference for the measurement system.

4. A device according to claim 3, in which the second source (600) is disposed above or below the detector (200), with the detector being disposed in the center of the moving member which constitutes a turntable (400) extending in a horizontal plane and rotating about a vertical axis (D2), with the volume (101, 102) being disposed at a point on the periphery of said turntable.

5. A device according to claim 1, in which a second volume (102 or 101) is provided operating as a storage volume for the purpose of providing deferred measurement of the activity of the fluid, and in particular of its activity due to isotopes having long lifetimes, this second metering volume also having an optimum volume-to-area ratio as seen by the detector (200), as well as a "high glass" surface state for the curved walls, so as to make negligible the interference due to the walls of the metering volume by corrosion products and solid fission products.

6. A device according to claim 5, in which the moving member is in the form of a turntable (400) extending in a horizontal plane and rotating about a vertical axis (D2), with the volumes (101, 102) being disposed at diametrically opposite peripheral points of the turntable about the axis of the turntable, said turntable including three collimators (431, 432, 433) disposed at 120° intervals and sait turntable rotating through steps of 60° or through steps of a submultiple of 60°, so as to be able to place any one of the collimators in a position where it faces one of the two volumes only, depending on the angle of rotation of the turntable.

7. A device according to claims 2 and 6, in which said first calibrated source (510) is placed at a point on the periphery of the turntable situated at 90° relative to the diameter (D1) of the two volumes (101, 102), with the turntable being rotatable through steps of 30° or a submultiple of 30° so as to be able to place any one of its collimators (431, 432, 433) facing one and only one of the three sources constituted by the two volumes (101, 102) and the calibrated source (510) as a function of the angle of rotation of the turntable.

## Patentansprüche

1. Vorrichtung zur Messung während des Betriebes von aus dem Wasserkreislauf eines Kernreaktors herrührender Gammastrahlung, insbesondere vom Primärkreislauf eines Druckwasserkernreaktors, bestehend aus:
Mindestens einer Meßkapazität (101, 102) für zu analysierende Flüssigkeit,
einen Strahlungsdetektor (200), der Meßkapazität gegenüber angeordnet,
die Vorrichtung wird charakterisiert durch:
Die Meßkapazität (101 oder 102), erhält die zu analysierende Flüssigkeit aus einem nachfolgenden kontinuierlichen Abfluß, so daß eine Realzeitmessung der Flüssigkeitsaktivität ermöglicht wird, insbesondere die auf kurzlebige Isotope zurückzuführende Radioaktivität, diese Meßkapazität präsentiert im weiteren einen durch den Detektor (200) aufgenommenen Optimalwert von Volumenverhältnis/Oberfläche von einem Fertigzustand "großer Brillanz" der konvexen Böden, so daß die Ursachenlast durch die Kontamination der Wände der Meßkapazität durch das Korrosionsprodukt und das Produkt der soliden Spaltung unwesentlich wiedergegeben wird;
sie besteht ferner aus Kollimatormitteln, zwischen der Kapazität und dem Strahlungsdetektor angeordnet, diese Mittel sind gebildet aus einer Vielzal von Kollimatoren (431, 432, 433) verschiedener Größe, auf einem gemeinsamen Element (400) montiert, beweglich im Hinblick auf die Anordnung Kapazität/Detektor/und Mittel zur automatischen Positionsbestimmung des beweglichen Elements in Funktion mit einem vom Detektor gelieferten Meßsignal, so daß zwischen dem Detektor und der Kapazität ein um so größerer Kollimator angeordnet wird, um so kleiner das eine Strahlungsstärke anzeigende Signal ist.

2. Vorrichtung nach Anspruch 1, bei der das mobile Element (400) zusätzlich mindestens eine Position trägt, die es erlaubt, die Kapazität zu verdecken und eine erste Kaliberquelle (510) gegenüber dem Detektor (200) zu plazieren, um eine effiziente Kontrolle desselben zu realisieren.

3. Vorrichtung nach Anspruch 1, bei der unter anderem mindestens eine den Detektor (200) permanent bestrahlende zweite Kaliberquelle (600) vorgesehen ist, um unabhängig von der Position des Mobilelements (400) eine Energieeinstellung der Meßkette zu realisieren.

4. Vorrichtung nach Anspruch 3, in der die zweite Quelle (600) über oder unter dem Detektor (200) angeordnet ist, wobei der Detektor im Zentrum des beweglichen Elements angeordnet ist, wobei das bewegliche Element die Form einer Trommel (400) aufweist, die sich in einer horizontalen Ebene befindet und sich um eine vertikale Achse (D2) bewegt, und wobei die Kapazität (101, 102) in einem peripheren Punkt der Trommel angeordnet ist.

5. Vorrichtung nach Anspruch 1, in der eine zweite Meßkapazität (102 oder 101) angeordnet ist, die als Lagerungskapazität dient, so daß eine andere Messung der Flüssigkeitsaktivität ermöglicht wird, insbesondere der aus den langlebigen Isotopen resultierenden Radioaktivität, diese zweite differierende Meßkapazität präsentiert auch einen Optimalwert aus Volumenverhältnis und der durch den Detektor (200) gewonnen Oberfläche, derart, daß ein Fertigzustand "großer Brillanz" der konvexen Böden erhalten wird, so daß die unwesentliche Ursachenlast durch die Kontamination der Wände der Meßkapazität durch das Produkt der Korrosion und das Produkt der Kernspaltung wiedergegeben wird.

6. Vorrichtung nach Anspruch 5, in der sich das Mobilelement in der Form einer Trommel (400) in einer horizontalen Ebene befindet und sich um eine vertikale Achse (D2) dreht, die Kapazitäten (101, 102) zwischen peripheren Punkten der Trommel diametral gegensätzlich zu Meßzwecken zur Achse der Trommel angeordnet sind, wobei die Trommel drei Kollimatoren (431, 432, 433) trägt, die in einem 120° Winkel angeordnet sind und in einem Winkel von 60° oder einem vielfachen von 60° drehbar sind, um so eine Funktion des Rotationswinkels erstellen zu können, wobei einer der Kollimatoren auf eine und eine einzige der beiden Kapazitäten gerichtet ist.

7. Vorrichtung nach den Ansprüche 2 und 6 in Kombination, bei der die erste Kaliberquelle (510) in einem Punkt der Peripherie der Trommel (400) angeordnet ist, wobei die erste Kaliberquelle (510) in Bezug auf den Durchmesser (D1) der zwei Kapazitäten (101, 102) gelegen ist, und bei der die Trommel in Schritten von 30° oder einem Vielfachen von 30° beweglich ist, so daß es durch die Funktion des Rotationswinkels ermöglicht wird, einen der Kolimatoren (431, 432, 433) in Bezug auf eine oder eine einzige der drei Quellen anzuordnen, wobei die drei Quellen aus den zwei Kapazitäten (101, 102) und der Kaliberquelle (510) bestehen.
